# EUROPEAN PATENT APPLICATION

(11) **EP 0 799 583 A1**
(43) Date of publication of application: **08.10.1997**
(21) Application number: 97200927.8
(22) Date of filing: 27.03.1997
(51) Int. Cl.: A43B 13/12, A43B 13/14, A43B 13/18, B29D 31/508

(54) **Composite sole for shoes in general**

(30) Priority: 02.04.1996 IT TV960022 U
(71) Applicant: TECNICA S.p.A, I-31040 Giavera del Montello (Treviso) (IT)
(72) Inventor: Zanatta, Marco, 31040 Nervesa della Battaglia, Treviso (IT); Renato, Lorenzi, 31027 Spresiano, Treviso (IT)
(74) Representative: Caregaro, Silvio

(57) **Abstract**

A composite sole for shoes in general is described, comprising a sole body (10) made of resilient material, in which a strengthening insert (12) is fitted. The insert (12) has maximum width portions (12/a, 12/b, 12/c), the outline of which remains on view outside the sole body (10). These portions can be provided with longitudinal or transverse seats or holes (21, 22, 24). In the position of the heel, the insert (12) can have a step portion (16).

## Description

The object of the present invention is a composite sole for shoes in general. A typical case of shoes which use this type of sole is that of shoes for sports use. In the present description, for the sake of simplicity and brevity of the description, reference is made to shoes of this type, although it is understood that this is a non-limiting example.

It is known that the sole of shoes of the aforementioned type, for the specific use and employment of these shoes, must have sufficient rigidity to provide the shoe with appropriate stability and above all resistance to torsion.

The object in question is currently achieved by producing the sole in a composite manner, and more specifically, consisting substantially of a sole body made of resilient material, in general rubber, for comfort when the shoe is worn, whereas there is applied to the sole body an insert made of a material with appropriate rigidity which can provide the composite sole as a whole with advantages and features of resistance and stability.

The materials used to produce this insert vary according to the degree of rigidity required, and for example polycarbonate, nylon, polyurethane and the like are used. In all cases the type of material used and the choice of material are known according to the art in this field. The mid-sole is currently applied to the sole body in accordance with two separate procedures, as specified hereinafter.

A first technique used in obtaining these composite soles consists of producing a substantially sandwich structure consisting of a lower sole body made of rubber or the like, to the upper part of which there is glued a mid-sole made of rigid material. On the outline of the mid-sole there can be attached by any known manner a box border or peripheral strip which completes the sole, to which the upper mounted on a last is attached.

Shoes produced in accordance with the above-described technique are acknowledged in principle to have a given reliability of service, particularly concerning resistance to the stresses which occur when the shoe is used. However the shoes in question have significant disadvantages.

A first disadvantage consists of the structural complexity of the composite sole of these shoes, which involves the use of at least three components to be assembled and two operations of assembling these components. This obviously involves an increase of the operation times, which ultimately leads to an increase in the cost of the shoes.

A further disadvantage consists in the fact that owing in particular to the considerable stresses to which the shoe is subjected in use, these assembled components can tend to separate from one another, even if only partially, to the detriment of the soundness of the shoe. This detracts inter alia from the features of sealing of the shoe, which are essential for footwear of this type.

A further disadvantage consists in the need to produce separately the various components which constitute the sole, i.e. the sole body, the mid-sole and the border for connection to the upper. In this respect also the production costs are increased, and thus the cost of the final product obtained.

Another technique for producing composite soles of the aforementioned type consists of embedding the insert completely in the sole body, since the latter is moulded in particular onto the insert, by injection or vulcanisation.

It is known that inserts of this type are generally filiform or strip components, the transverse shape of which is much smaller than that of the sole body, such that the latter is lacking in reinforcement to a large extent. The reinforcement in question is lacking in particular in the peripheral areas of the sole body, such that the stability of the latter as a whole is reduced substantially.

A composite sole for shoes for sports use, particularly for trekking or the like, which permits elimination of the disadvantages of conventional soles, has now been conceived, and constitutes the subject of the present invention.

One of the main objects of the present invention is thus to provide a composite sole as defined above, the sole body of which incorporates a strengthening insert made of a single material or a plurality of materials injected one on top of the other, the transverse shape of which corresponds substantially to that of the sole body, whilst being partially contained in the latter, this insert being provided with maximum width portions, the outline of which, when the insert is embedded in the sole body, remains on view outside the latter.

According to a further feature of the composite sole according to the present invention, the outline of these maximum width portions is aligned with the outer surface of the sole, thus contributing significantly towards strengthening the edge and the lateral surface of the sole. In view of the above description, it is apparent that the stability and anti-torsion properties of the sole according to the invention are substantially improved, compared with conventional soles.

The features and advantages of the composite sole according to the present invention will become apparent from the following detailed description of three non-limiting embodiments produced with reference to the attached figures, in which:
- Figure 1 is a general lateral view of a first embodiment of the composite sole according to the present invention;
- Figure 2 is a schematic perspective view of the strengthening insert of the sole in figure 1;
- Figure 3 is a schematic plan view in longitudinal cross-section of the sole in figure 1;
- Figures 4 to 6 are views similar to figures 1 to 3, of a first variant embodiment of the sole according to the present invention; and
- Figure 7 is a schematic plan view in longitudinal cross-section of a second variant embodiment of the sole according to the present invention.

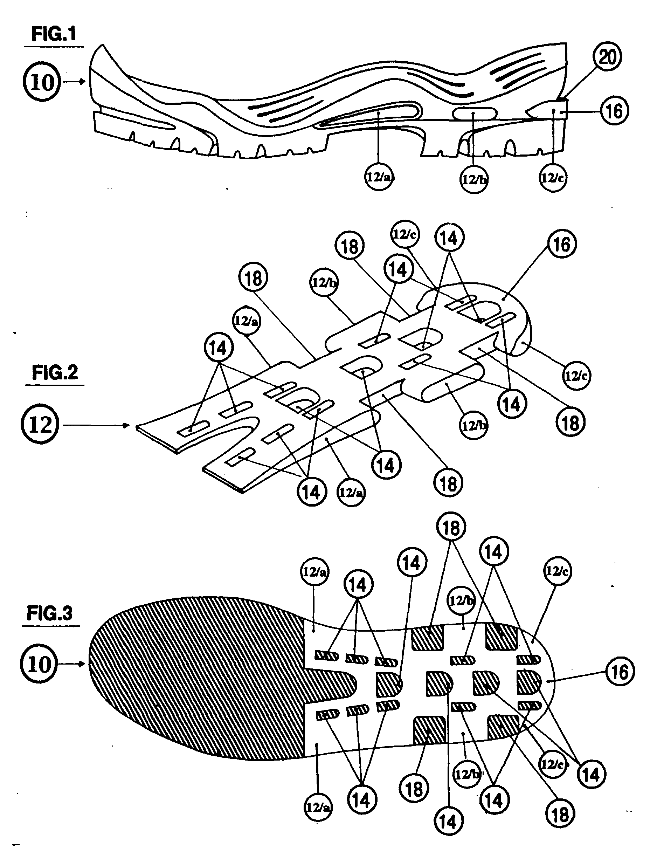

The first embodiment of the composite sole according to the present invention is now described with particular reference to figures 1 and 2.

It substantially comprises a sole body, generally indicated 10, inside which there is embedded a strengthening insert generally indicated 12, shown in isolation in figure 2.

The sole body 10 is not described in detail since it is of a known type and is generally made of rubber or the like, with differentiated compounds for formation for example of reinforcement ribs, disposed in any manner. With reference in particular to figure 2, it can be seen that the strengthening insert 12 has a substantially elongate shape, and with reference to figure 3, a width which substantially coincides with that of the sole body 10.

Figure 2 in particular shows that the strengthening insert 12 has a differentiated structure, since its body contains cavities or recesses 14 with various shapes, which are disposed much as to accommodate the rubber of the sole body 10 when the latter is moulded by injection or vulcanisation onto the strengthening insert 12.

As can be seen again in figure 2, in its rear part the insert 12 has a portion indicated 16 with a thickness greater than the other portions, which is in the form of a full wall with a substantially semicircular shape towards the rear part. More specifically the upper surface of the portion 16 is flat for reasons which will become apparent hereinafter.

According to one of the features of the composite sole according to the present invention, the width of the strengthening insert 12 is variable since, as can be seen in figure 2, its perimeter outline, and particularly that of the lateral edges, is not straight, and with reference also to figure 3, the average value of the width of the insert 12 is such that its overall transverse shape corresponds substantially to that of the sole body 10, whilst remaining partially contained in the latter.

According to a further advantageous feature of the composite sole according to the present invention, the strengthening insert 12 has maximum width portions which are indicated 12a, 12b and 12c. The width of these portions is exactly the same as that of the sole body 10, as can be seen in greater detail in figure 3.

By this means the outline or lateral edge of these portions 12/a, 12/b and 12/c is on view outside the sole body 10, as can be seen in particular in figure 1. Additionally, as can be seen in particular in figure 3, the outline of these portions 12/a, 12/b and 12/c is aligned with the lateral surface of the sole body 10. With particular reference to figures 2 and 3, the strengthening insert 12 has on its outline a series of recesses 18, which are substantially rectangular in the embodiment considered, the walls of which are connected by the maximum width portions 12/a, 12/b and 12/c.

Provision of these portions 12/a, 12/b and 12/c is particularly advantageous since they constitute a reinforcement as well as a strengthening component for the sole body 10 in the position of its lateral surface. The contribution of these portions to the stability of the composite sole should therefore be added to, and integrated with that of the body of the strengthening component 12.

As can be seen in particular in figure 1, the maximum thickness portion 16 which is provided in the rear part of the insert 12, is disposed in the position of a recess 20 in the sole body 10, and thus forms a step area which for example permits application of known lugs which are widely used with this type of shoe.

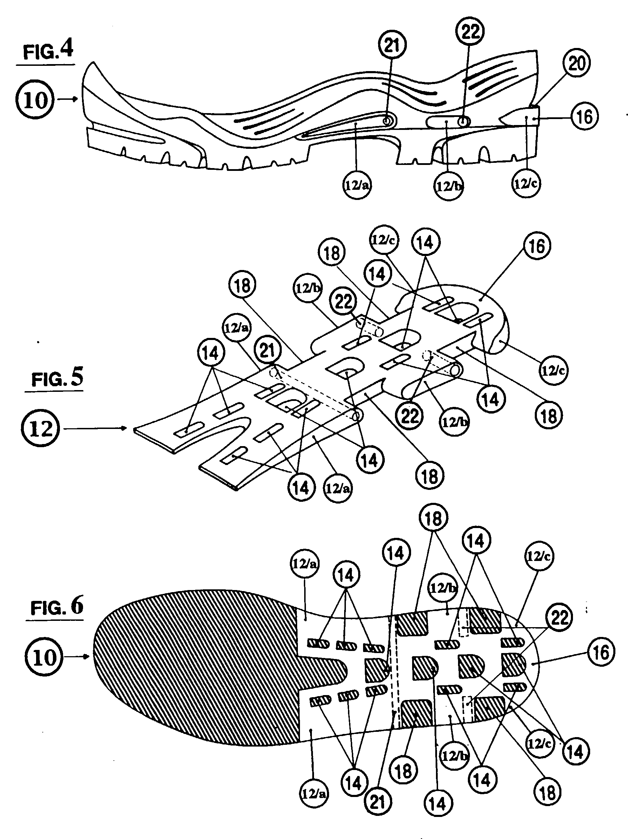

With reference to figures 4 to 6, the first variant embodiment of the sole according to the present invention is now described.

The sole in these figures has a further advantageous feature in addition to those already described for the first embodiment, similar components in the variant embodiment being indicated with the same reference numbers, such that they are not described in detail. This further feature consists in that the maximum width portions 12/a, 12/b and 12/c, as well as being advantageous for strengthening the sole as described above, have the additional advantage that they can be provided with a seat or a hole which may or may not pass along the width or length of the insert 12 either transversely or longitudinally. These seats or holes can constitute components for connection of attachment of accessories or components for use in general, depending on the activity for which the footwear sole is used.

These accessories or components for use in general can consist of spats, lugs in general, snow-shoes or the like.

In figures 4 to 6, by way of non-limiting example, the insert 12 is provided in the heel part with a transverse through hole 21 which passes through the entire width of the insert 12 and opens on the exterior of the sole 10. The insert 12 is also provided with a pair of transverse blind holes 22 which communicate at one of their ends with the exterior of the sole 10.

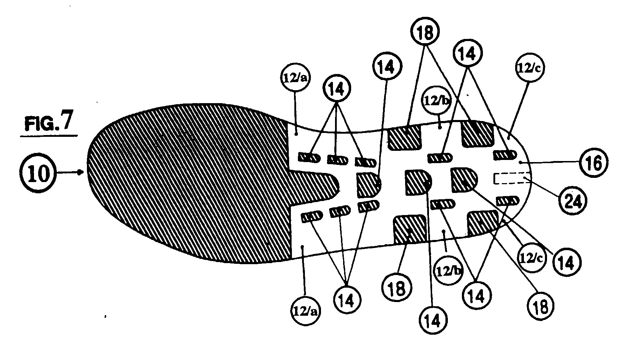

In figure 7, in which the components similar to those in figures 1 to 3 are indicated with the same reference numbers, it can be seen that the insert 12 has a longitudinal hole 24, which at one end communicates with the exterior of the sole 10, in the position of the maximum thickness portion 16.

It will however be appreciated that the variant embodiments are purely by way of example, since longitudinal and / or transverse holes can be provided simultaneously, or in a number different from that shown. As can be seen in particular in figures 1, 6 and 7, the insert 12 extends from the heel portion of the sole body 10 to the end of the arch of the foot, but it can also be extended to the toe of the shoe.

Finally it will he appreciated that structurally and conceptually equivalent variants and / or modifications can be made to the composite sole for shoes in general according to the present invention, without departing from the scope of its protection.

## Claims

1. Composite sole for shoes in general, comprising a sole body made of resilient material such as rubber or the like, to which there is applied a strengthening insert with a differentiated structure, the width of this insert (12) being variable and having an average value such that its transverse shape corresponds substantially to that of the sole body (10), whilst remaining partially contained in the latter, this insert being provided with maximum width portions (12/a, 12/b, 12/c), the outline of which, when the insert (12) is embedded in the sole body (10), is aligned with the lateral surface of the sole body (10), characterised in that the outline of these maximum width portions (12a, 12/b, 12/c) remains on view outside the latter.

2. Composite sole according to claim 1, characterised in that the maximum width portions (12/a, 12/b, 12/c) are made of rigid and substantially flat material.

3. Composite sole according to claim 1, characterised in that the maximum width portions (12/a, 12/b, 12/c) are made in a single piece, and of the same materials as the insert body (12).

4. Composite sole according to claim 1, characterised in that in the position of the heel the insert (12) has a maximum thickness portion (16) which forms a step area in its upper part, together with a recess (20) of the sole body (10).

5. Composite sole according to claim 4, characterised in that the maximum thickness portion (16) has a solid wall, the upper surface of which is flat.

6. Composite sole according to claim 1, characterised in that on its outline the insert (12) has a series of recesses (18), the walls of which are connected by these maximum width portions (12/a, 12/, 12/c).

7. Composite sole according to claim 1, characterised in that at least one of the maximum width portions (12/a, 12/b, 12/c) is provided with a seat, a hole or the like (21, 22, 24).

8. Composite sole according to claim 7, characterised in that this at least one hole (21) is a through transverse hole which communicates with the exterior of the sole (10).

9. Composite sole according to claim 7, characterised in that the at least one hole (22) is transverse and communicates at one of its ends with the exterior of the sole (10), whereas the other end inside the insert (12) is blind.

10. Composite sole according to claim 7, characterised in that the at least one hole (24) is longitudinal and communicates at one end with the exterior of the sole (10), whereas the other end inside the insert (12) is blind.

11. Composite sole according to claim 1, characterised in that the insert (12) is made of a single material or a plurality of materials injected one on top of the other.
